(19) Europäisches Patentamt
European Patent Office
Office européen des brevets

(11) **EP 4 776 032 A1**

(12) **EUROPEAN PATENT APPLICATION**
published in accordance with Art. 153(4) EPC

(43) Date of publication:
**15.07.2026 Bulletin 2026/29**

(21) Application number: **24919164.4**

(22) Date of filing: **10.09.2024**

(51) International Patent Classification (IPC):
**G01T 1/24** (2006.01)     **H10F 30/00** (2025.01)

(52) Cooperative Patent Classification (CPC):
**G01T 1/24**

(86) International application number:
**PCT/JP2024/032428**

(87) International publication number:
**WO 2025/158701 (31.07.2025 Gazette 2025/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.01.2024 JP 2024007566**

(71) Applicant: **JX Advanced Metals Corporation
Tokyo 105-8417 (JP)**

(72) Inventor: **IIMURA,Ryusuke
Kitaibaraki-shi, Ibaraki 319-1535 (JP)**

(74) Representative: **Yeadon IP Limited
114 Wellington Street
Leeds LS1 1BA (GB)**

(54) **RADIATION DETECTION ELEMENT, RADIATION DETECTOR, AND PRODUCTION METHOD FOR RADIATION DETECTION ELEMENT**

(57)     To provide a radiation detection element capable of measuring the energy of radiation with good accuracy, a radiation detector, and a method for producing the radiation detection element. A radiation detection element comprising: a compound semiconductor crystal substrate made of zinc cadmium telluride with indium added as an impurity; and a metal electrode provided on a surface of the compound semiconductor crystal substrate; wherein an energy resolution for 122 keV gamma rays emitted from $^{57}$Co is 7% or less.

**Description**

FIELD OF THE INVENTION

The present invention relates to a radiation detection element, a radiation detector, and a method for producing a radiation detection element.

BACKGROUND OF THE INVENTION

Development is underway to create compound semiconductors that offer high efficiency, high resolution, and miniaturization for direct-conversion radiation detection elements. Among these, zinc cadmium telluride (CdZnTe), a II-VI compound semiconductor, has recently attracted attention as a promising material for radiation detection elements. Compared to other semiconductors, CdZnTe has a relatively large atomic number, resulting in high radiation absorption and detection efficiency. Furthermore, its large bandgap energy means that thermal leakage current is small even at room temperature, eliminating the need for cooling equipment (allowing operation at room temperature).

In radiation detection elements using a compound semiconductor crystal substrate made of CdZnTe, it is useful to increase the resistivity of the substrate and form ohmic electrodes on both sides of the substrate to suppress the operating current of the element.

However, obtaining good ohmic properties for compound semiconductor crystal substrates made of CdZnTe, which has high resistivity, is difficult. A problem arises when high voltage is applied, as the operating current increases due to the influence of the junction state at the interface between the semiconductor and the electrode. Furthermore, poor ohmic junctions affect not only the electrical properties but also the radiation spectral properties.

Patent Literature 1 proposes a compound semiconductor crystal for a radiation detection element, characterized by being made of zinc cadmium telluride containing 0.2 ppm to 2.6 ppm by weight of indium as an impurity, having good radiation spectral characteristics, a product $\mu\tau(e)$ of electron mobility $\mu$ and electron lifetime $\tau$ of 7.85E-04 cm$^2$/V or more, a resistivity of 1.2E+11 $\Omega$cm or more when a voltage of 100V is applied, and a ratio b/a of the change in leakage current b after 60 seconds from the start of bias voltage application to the leakage current value a at the start of bias voltage application being 56% or less.

CITATION LIST

Patent Literatures

[Patent Literature 1] Japanese Patent No. 5953116

SUMMARY OF THE INVENTION

One method for forming ohmic junctions on a compound semiconductor crystal substrate made of CdZnTe, which has high resistivity, is the formation of Pt electrodes by electroless displacement plating. In conventional plating methods for forming Pt electrodes, even when devices are fabricated from substrates with good crystal properties, the current-voltage characteristics (hereinafter also called IV characteristics) are poor, and the operating current increases under high voltage application, leading to a problem of degraded energy resolution of radiation spectra. **In** such cases, the accuracy of radiation energy measurement becomes poor.

The embodiments of the present invention have been made to solve the above-mentioned problems, and aim to provide a radiation detection element, a radiation detector, and a method for producing a radiation detection element that can measure the energy of radiation with good accuracy.

The above problems are solved by the present invention as specified in (1) to (11) below.

(1) A radiation detection element comprising:

a compound semiconductor crystal substrate made of zinc cadmium telluride with indium added as an impurity; and
a metal electrode provided on a surface of the compound semiconductor crystal substrate;
wherein an energy resolution for 122 keV gamma rays emitted from $^{57}$Co is 7% or less.

(2) The radiation detection element according to (1),
wherein the energy resolution for 122 keV gamma rays emitted from $^{57}$Co is 5% or less.
(3) The radiation detection element according to (1) or (2),

wherein the energy resolution for 122 keV gamma rays emitted from $^{57}$Co is 3.4% or less.

(4) The radiation detection element according to any one of claims (1) to (3),
wherein an ideality factor n of an IV characteristic is 1.0 to 1.5.

(5) The radiation detection element according to any one of claims (1) to (4),
wherein a resistivity at an operating voltage of 500 V is $1 \times 10^{11}$ Ωcm or more.

(6) A radiation detector comprising:

the radiation detection element according to any one of claims (1) to (5); and
an amplification unit connected to the radiation detection element and amplifying an electrical signal output from the radiation detection element.

(7) A method for producing a radiation detection element, comprising:

cutting a wafer from an ingot of a compound semiconductor crystal containing zinc cadmium telluride with indium added as an impurity, and polishing the wafer;
forming a metal electrode on a surface of the wafer;
cutting a radiation detection element from the wafer on which the metal electrode is formed; and
placing the radiation detection element in an annealing furnace and performing annealing at 100 to 200°C for 10 minutes to 24 hours.

(8) A method for producing a radiation detection element, comprising:

cutting a wafer from an ingot of a compound semiconductor crystal containing zinc cadmium telluride with indium added as an impurity, and polishing the wafer;
forming a metal electrode on a surface of the wafer;
placing the wafer on which the metal electrode is formed in an annealing furnace and annealing at 100 to 200°C for 10 minutes to 24 hours; and
cutting a radiation detection element from the annealed wafer;

(9) The method for producing a radiation detection element according to (7) or (8),
wherein the radiation detection element has an energy resolution of 7% or less for 122 keV gamma rays emitted from $^{57}$Co.

(10) The method for producing a radiation detection element according to (7),
wherein, in cutting out a radiation detection element from a wafer, 30 radiation detection elements are cut out from one wafer, and after the annealing, a standard deviation of the energy resolution of the 30 radiation detection elements when the energy resolution for 122 keV gamma rays emitted from $^{57}$Co is measured under the same conditions, is 2% or less.

(11) The method for producing a radiation detection element according to (8),
wherein, in cutting out a radiation detection element from a wafer, 30 radiation detection elements are cut out from one wafer, and a standard deviation of the energy resolution of the 30 radiation detection elements when the energy resolution for 122 keV gamma rays emitted from $^{57}$Co is measured under the same conditions, is 2% or less.

According to embodiments of the present invention, it is possible to provide a radiation detection element, a radiation detector, and a method for producing a radiation detection element that can perform radiation energy measurement with good accuracy.

BRIEF DESCRIPTION OF THE DRAWINGS

FIG. 1 is a circuit diagram of a radiation detector according to an embodiment of the present invention.
FIG. 2 is a perspective view showing a radiation detection element according to an embodiment of the present invention.
FIG. 3 is a cross-sectional view taken along line III-III in FIG. 2.
FIG. 4 is the result of the IV characteristic analysis using the thermionic emission model for each radiation detection element before and after annealing according to Example 1.

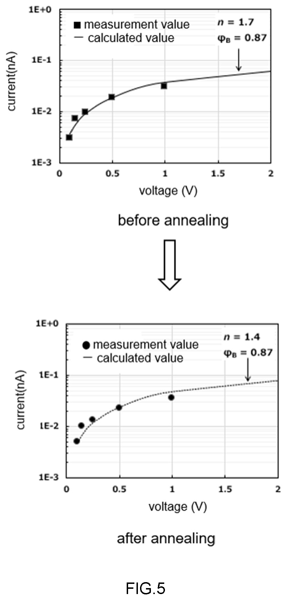

FIG. 5 is the result of the IV characteristic analysis using the thermionic emission model for each radiation detection element before and after annealing according to Example 2.

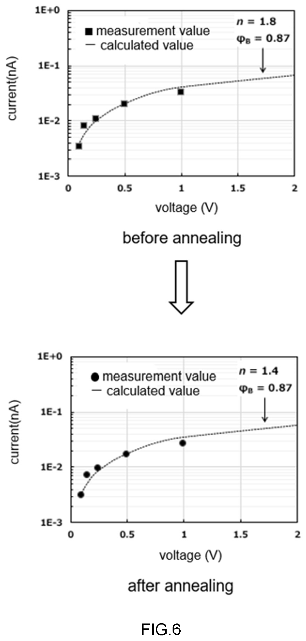

FIG. 6 is the result of the IV characteristic analysis using the thermionic emission model for each radiation detection element before and after annealing according to Example 3.

FIG. 7 is the result of the IV characteristic analysis using the thermionic emission model for each radiation detection element before and after annealing according to Comparative Example 1.

FIG. 8 is the evaluation result of the energy resolution related to Test Example 3.

FIG. 9 is the evaluation result of the annealing temperature dependence of resistivity in Test Example 4.

FIG. 10 is the evaluation result of the annealing time dependence of resistivity in Test Example 5.

FIG. 11 is the evaluation result of the annealing temperature dependence of the $\mu\tau$ value related to Test Example 6.

FIG. 12 is the evaluation result of the annealing time dependence of the $\mu\tau$ value related to Test Example 7.

DETAILED DESCRIPTION OF THE INVENTION

Next, embodiments for carrying out the present invention will be described in detail. The present invention is not limited to the following embodiments, and it should be understood that appropriate design changes, improvements, etc., can be made based on the ordinary knowledge of those skilled in the art, without departing from the spirit of the invention.

[Configuration of Radiation Detector]

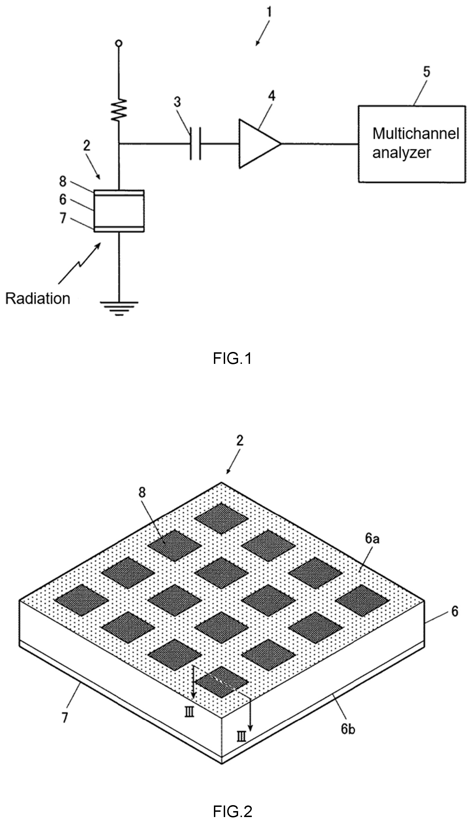

The schematic configuration of a radiation detector according to an embodiment of the present invention will now be described. As shown in FIG. 1, the radiation detector 1 of this embodiment includes a radiation detection element 2, a capacitor 3, an amplifier (amplification unit) 4, a multi-channel analyzer (MCA) 5, etc. One electrode (common electrode 7) of the radiation detection element 2 is connected to ground (earthed), and the other electrode (pixel electrode 8) is connected to a negative potential, thereby applying a predetermined bias voltage. The other electrode is connected to the MCA 5 via the capacitor 3 and amplifier 4.

The compound semiconductor crystal substrate 6 of the radiation detection element 2 is formed of a crystal of zinc cadmium telluride (CdZnTe (CdTe in which some of the Cd is replaced with Zn)), which is a group II-VI compound semiconductor. When this CdZnTe is exposed to radiation (hard X-rays or gamma rays), it emits electrons, and these electrons become an ionization current due to the bias voltage. In the embodiment of the present invention, the radiation detector 1 converts the ionization current of the radiation detection element 2 into a pulse signal via a capacitor 3 and an amplifier 4. The MCA 5 then analyzes the pulse signal to obtain the radiation spectrum.

[Configuration of the Radiation Detection Element]

The specific configuration of the radiation detection element according to the embodiment of the present invention will now be described. The radiation detection element 2 according to the embodiment of the present invention may be a planar type in which a common electrode 7 is formed on the entire surface of a compound semiconductor crystal substrate 6. As shown in FIG. 2, the radiation detection element 2 according to the embodiment of the present invention may be a pixel type composed of a compound semiconductor crystal substrate 6, a common electrode 7, a pixel electrode 8, etc. The compound semiconductor crystal substrate 6 is formed in the shape of a thin plate, and the main surface on which the common electrode 7 and the pixel electrode 8 are formed is parallel to a predetermined crystal plane (for example, the (111) plane). Here, the crystal orientation [111] is the polarity axis in CdZnTe, so when the predetermined crystal plane is the (111) plane, the surface composition of one main surface (hereinafter referred to as surface A) 6a of the surface of the compound semiconductor crystal substrate 6 has a high proportion of Cd, and the surface composition of the other main surface (hereinafter referred to as surface B) 6b has a high proportion of Te.

In the pixel-type radiation detection element 2 shown in FIG. 2, the common electrode 7 is formed to cover the entire B surface 6b of the compound semiconductor crystal substrate 6. Multiple pixel electrodes 8 are provided on the A surface 6a of the compound semiconductor crystal substrate 6 and are arranged in a matrix (four rows vertically and horizontally in the figure). Both the common electrode 7 and the pixel electrodes 8 are formed as thin films of platinum (Pt), gold (Au), indium (In), other metals, or alloys containing these metals. That is, the compound semiconductor crystal substrate 6 and the common electrode 7, and the compound semiconductor crystal substrate 6 and the pixel electrodes 8 are in ohmic contact. Hereafter, when the common electrode 7 and the pixel electrodes 8 are not distinguished, both electrodes will be collectively referred to as metal electrodes 7 and 8.

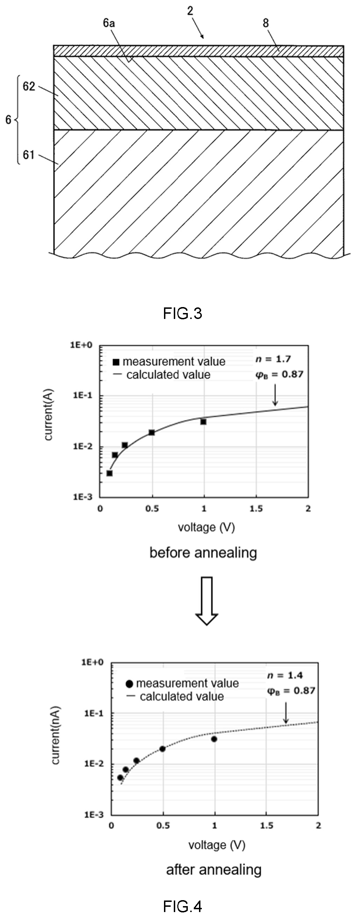

Furthermore, as shown in FIG. 3, an intermediate layer 62 may be formed between the bulk crystal 61 of the compound semiconductor crystal substrate 6 and the metal electrodes 7 and 8 (in this case, the pixel electrode 8), specifically on the surface (in this case, the A surface) of the compound semiconductor crystal substrate 6, where metal electrodes 7 and 8 are formed. This intermediate layer 62 is mainly composed of tellurium oxide and a metal such as Pt that constitutes the metal electrode.

The composition of the compound semiconductor crystal substrate 6 (or the composition of the bulk crystal 61 if it has a bulk crystal 61 and an intermediate layer 62) is not particularly limited as long as it contains zinc cadmium telluride, but for example, it may be represented by the following formula 1.

Formula 1:          $Cd_{1-x}Zn_xTe$

(In formula 1, x is the molar ratio, and x = 0 to 0.1.)

Furthermore, the compound semiconductor crystal substrate 6 is doped with indium (In) (added as an impurity). The In doping is performed to increase the resistivity of the compound semiconductor crystal substrate 6, and the amount of doping can be appropriately adjusted according to the desired resistivity. From this viewpoint, the concentration of In in the compound semiconductor crystal substrate 6 can be, for example, 0.1 to 2.6 ppm by mass.

The radiation detection element according to the embodiment of the present invention has an energy resolution of 7% or less for 122 keV gamma rays emitted from [57]Co. Energy resolution is an indicator of the accuracy of measuring the energy of radiation. In principle, when radiation of a certain energy loses all of its energy in the detector, the energy spectrum of this radiation becomes a line spectrum. However, in actual detectors, it is detected as a broadened spectrum having a certain distribution. The narrower the width of this distribution, the more accurately the energy distribution of the radiation can be measured. In the present invention, the energy resolution is determined by the value obtained by dividing the half-width ΔE of the peak of the distribution spectrum by the energy of the radiation (peak channel value) E: ΔE/E. When the energy resolution of the radiation detection element is 7% or less, the energy distribution of radiation can be measured accurately by a radiation detector using the radiation detection element. In the embodiment of the present invention, the radiation detection element preferably has an energy resolution for 122 keV gamma rays emitted from $^{57}$Co of 5% or less, and more preferably 3.4% or less.

When fabricating an ohmic radiation detection element from a high-resistance CdZnTe substrate, it is difficult to form a good ohmic junction, which can lead to an increase in the operating current at high voltages, resulting in a deterioration of the operating characteristics with respect to radiation. Here, operating current refers to the current value that flows through the element when an external voltage is applied to the radiation detection element. To obtain good operating characteristics with respect to radiation, it is preferable to apply a high external voltage and keep the operating current low. The radiation detection element according to the embodiment of the present invention has an energy resolution of 7% or less for 122 keV gamma rays emitted from $^{57}$Co, making it possible to measure the energy of radiation with good accuracy.

The energy resolution of the radiation detection element in the embodiment of the present invention can be measured as follows. Specifically, the radiation detection element is configured as the radiation detector shown in FIG. 1, and the spectrum of 122 keV gamma rays emitted from cobalt ($^{57}$Co) is measured when a bias voltage of 500 V is applied using the radiation detector. The peak half-width ΔE and the radiation energy (peak channel value) E are determined from the radiation spectrum, and the energy resolution (%) is obtained by calculating ΔE/E. Preferably, the energy resolution of the radiation detection element in the embodiment of the present invention is the average value of each numerical value obtained by performing the measurement multiple times under the same conditions.

In the embodiment of the present invention, the ideality factor n of the IV characteristic is preferably 1.0 to 1.5. With such a configuration, the junction interface state of the radiation detection element is improved, the operating current when a high voltage is applied is reduced, and the spectral characteristics are improved. The closer the ideality factor n of the IV characteristic is to 1.0, the more ideal the junction interface state of the radiation detection element is, and the closer it is to 2.0, the worse the junction interface state of the radiation detection element is. The ideality factor n of the IV characteristic of the radiation detection element in the embodiment of the present invention is more preferably 1.0 to 1.3, and even more preferably 1.0 to 1.2.

The ideality factor n of the IV characteristic of the radiation detection element in the embodiment of the present invention can be measured as follows. That is, by gradually applying a voltage to the radiation detection element, an IV curve (IV characteristic) is plotted on a graph based on the applied voltage (V) and the current (I) that flows with it. Next, the IV characteristic is analyzed using the thermionic emission model (electron conduction model at the metal (conductor)-semiconductor interface) shown in the following equations (1) and (2).

$$I = I_0 \left[ \exp\left(\frac{qV}{nkT}\right) - 1 \right] \qquad (1)$$

$$I_0 = SAT^2 \exp\left(-\frac{q\varphi_B}{kT}\right) \qquad (2)$$

In equations (1) and (2), q is the elementary charge, V is the applied voltage, n is the ideality factor, k is the Boltzmann constant, T is the absolute temperature, S is the element area, A is the Richardson constant, and $\varphi_B$ is the energy barrier height. The ideality factor n of the IV characteristic is calculated using equations (1) and (2).

In the embodiment of the present invention, it is preferable that the resistivity of the radiation detection element at an operating voltage of 500 V is $1 \times 10^{11}$ Ωcm or more. Since resistivity is determined by the current value relative to the applied voltage, generally, as the operating current increases, the resistivity decreases. Therefore, a large resistivity means that the operating current is constant (does not increase). When the resistivity of the radiation detection element at an operating voltage of 500 V is $1 \times 10^{11}$ Ωcm or more, the operating current does not increase even under high voltage application, and the IV characteristic of the radiation detection element becomes better. In the embodiment of the present invention, it is more preferable that the resistivity of the radiation detection element at an operating voltage of 500 V is $3 \times 10^{11}$ Ωcm or more.

The resistivity (ρ) of the radiation detection element at an operating voltage of 500V according to an embodiment of the present invention can be calculated by determining the resistance (R) from the current (I) and voltage (V) values when an operating voltage of 500V is applied to the radiation detection element using the formula R = V/I, and then calculating the resistivity (ρ) from the cross-sectional area (S) and thickness (L) of the element using the formula ρ = R × S/L.

[Method for Producing a Radiation Detection Element]

Next, a method for producing a radiation detection element according to an embodiment of the present invention will be described.

First, a thin, disc-shaped wafer (compound semiconductor crystal substrate) is cut from a single-crystal ingot (compound semiconductor crystal ingot) made of zinc cadmium telluride with indium added as an impurity, along a predetermined crystal plane (for example, crystal plane (111)).

The single-crystal ingot made of zinc cadmium telluride can be manufactured by the vertical temperature gradient solidification (VGF) method described in Patent Literature 1. A crucible filled with Cd, Zn, and Te can be placed inside a vacuum-sealed quartz ampoule, and a reservoir for Cd filling can be provided at the bottom of the quartz ampoule so that the vapor pressure of Cd is applied during single crystal growth. Then, by controlling the position of the crucible filled with raw materials and the reservoir filled with Cd at predetermined temperatures, the single crystal raw materials are melted and Cd is vaporized from the reservoir, and while controlling the vapor pressure of Cd, a single crystal made of zinc cadmium telluride can be grown. After the single crystal growth is complete, ingot annealing can be performed at 940 to 960°C for about 20 hours.

Next, the cut surface of the cut wafer is physically mirror-polished using an abrasive such as alumina powder. The polishing process may be repeated multiple times.

Next, if the radiation detection element is of the planar type, the metal electrode formation process by plating described later is carried out. On the other hand, if the radiation detection element is of the pixel type, after the polishing process described above, a resist film patterned in a predetermined shape is formed in the area of the wafer other than the area where the electrode part is to be formed. Specifically, first, the wafer is immersed in methanol and ultrasonically cleaned at room temperature for a predetermined time to remove foreign matter attached to the wafer. Next, a photoresist is applied to the surface of the wafer and the photoresist is exposed using a photomask on which the pixel electrode pattern is drawn. Next, the photosensitive photoresist is removed by developing. Next, the wafer is immersed in an etching solution such as methanol mixed with bromine (a bromine-methanol solution) and the polished surface of the wafer is etched at room temperature for a predetermined time to remove the processed altered layer from the wafer surface. Next, the etching solution is removed from the wafer using methanol, and methanol is removed from the wafer using pure water.

Next, the wafer is immersed in a plating solution, such as a solution of chloroplatinic acid (IV) hexahydrate aqueous solution mixed with hydrochloric acid, to form metal electrodes (Pt electrodes) in the area where the electrodes are to be formed (metal electrode formation step). **If** forming Au electrodes or **In** electrodes instead of Pt electrodes, the appropriate plating solution is prepared for each.

After the metal electrodes are formed, if the radiation detection element is planar type, the wafer is left as is; if it is pixel type, the excess photoresist is removed, and then the wafer is washed with pure water. Next, the wafer and metal electrodes are dried by spraying them with an inert gas such as nitrogen gas.

Next, the wafer with the metal electrode formed on the polished surface is cut out and divided into multiple substrates, and individual radiation detection elements are cut out from the wafer.

Through these steps, a radiation detection element is manufactured in which a metal electrode is formed on the surface of a compound semiconductor crystal substrate made of zinc cadmium telluride with indium added as an impurity. Furthermore, at this time, in the surface layer of the compound semiconductor crystal substrate where the metal electrode is formed on its surface, i.e., as shown in FIG. 3, an intermediate layer is formed between the bulk crystal of the compound semiconductor crystal substrate and the metal electrode, mainly consisting of tellurium oxide and a metal such as Pt that constitutes the metal electrode.

Next, the radiation detection element is placed in an annealing furnace and annealed at 100 to 200°C for 10 minutes to 24 hours. The annealing temperature is preferably 110 to 190°C, more preferably 115 to 185°C, even more preferably 120 to 180°C, even more preferably 125 to 175°C, even more preferably 130 to 170°C, even more preferably 135 to 165°C, even more preferably 140 to 160°C, and even more preferably 150°C. The annealing atmosphere is preferably an inert gas atmosphere such as $N_2$. By annealing the radiation detection element under these conditions, the state of the junction interface is improved, the operating current of the element is reduced without degrading the $\mu\tau$ value (product of mobility and carrier lifetime), and the operating characteristics (energy resolution) for radiation can be improved. **In** this way, a radiation detection element according to an embodiment of the present invention is obtained. Furthermore, in the above-described embodiment, a wafer on which metal electrodes are formed on the polished surface is cut out and divided into multiple substrates, and after cutting out individual radiation detection elements from the wafer, the radiation detection elements are annealed. However, the embodiment is not limited to this. That is, the wafer on which metal electrodes are formed on the polished surface may be annealed, and then the radiation detection elements may be cut out from the annealed wafer.

As described above, the radiation detection element manufactured according to the embodiment of the present invention has an energy resolution of 7% or less for 122 keV gamma rays emitted from [57]Co. Furthermore, in the process of cutting out radiation detection elements from a wafer, it is preferable that the standard deviation of the energy resolution of the 30 radiation detection elements is 2% or less when the energy resolution for 122 keV gamma rays emitted from $^{57}$Co is measured under the same conditions after cutting out 30 radiation detection elements from one wafer and performing an annealing process. With such a configuration, multiple radiation detection elements with well suppressed variations in energy resolution can be obtained from a single wafer, resulting in good producing efficiency. Here, the "standard deviation of the energy resolution of the 30 radiation detection elements" is the positive square root obtained by summing the squares of the differences between the value of the target data and the mean of the 30 data points, and then dividing by the total number of data points (30). The standard deviation of the energy resolution of the 30 radiation detection elements is more preferably 1.5% or less, and even more preferably 1% or less. The standard deviation of the energy resolution of the radiation detection elements described above is also affected by conditions such as the growth conditions of the compound semiconductor crystal, the ingot annealing after ingot creation, and the plating conditions in the metal electrode formation process of the element. However, in the embodiment of the present invention, it is particularly important to optimize the annealing conditions after electrode formation, etc., thereby controlling the standard deviation of the energy resolution.

EXAMPLES

The following examples are provided to better understand the present invention and its advantages, but the present invention is not limited to these examples.

(Test Example 1: Fabrication of a Radiation Detection Element)

A thin, disc-shaped wafer (compound semiconductor crystal substrate) was cut from an ingot of a single crystal (Cd 0.965 Zn 0.035 Te) made of zinc cadmium telluride with indium added as an impurity, by cutting along a predetermined crystal plane (111). The method for growing the single crystal made of zinc cadmium telluride was carried out by the vertical temperature gradient solidification (VGF) method described in Patent Document 1 above. Specifically, a crucible filled with Cd, Zn, and Te was placed inside a vacuum-sealed quartz ampoule, and a reservoir for Cd filling was provided at the bottom of the quartz ampoule so that the vapor pressure of Cd was applied during single crystal growth. Then, while controlling the position of the crucible filled with raw materials and the reservoir filled with Cd at predetermined temperatures, a single crystal made of zinc cadmium telluride was grown by melting the single crystal raw materials and volatilizing Cd from the reservoir, while controlling the vapor pressure of Cd. After the single crystal growth was completed, the ingot was annealed at 945°C for 20 hours.

Next, the cut surface of the cut wafer was physically mirror-polished using alumina powder as an abrasive.

Next, the wafer was immersed in a plating solution of chloroplatinic acid (IV) hexahydrate aqueous solution mixed with hydrochloric acid to form a Pt electrode across the entire surface (polished surface) of one side of the wafer. After that, the wafer was washed with pure water.

Next, the wafer and Pt electrode were dried by spraying nitrogen gas onto them. The size of the wafer was approximately 50 mm x 50 mm x 1.4 mm (length x width x thickness).

Next, the wafer on which the Pt electrode was formed was cut, dividing it into multiple substrates with dimensions of 4 mm x 4 mm x 1.4 mm (length x width x thickness), and individual radiation detection elements were cut out from the wafer.

Through these steps, a radiation detection element was manufactured in which a metal electrode was formed on the surface of a compound semiconductor crystal substrate made of zinc cadmium telluride with indium added as an impurity. Furthermore, an intermediate layer, mainly composed of tellurium oxide, was formed between the bulk crystal of the compound semiconductor crystal substrate and the metal electrode.

(Test Example 2: Evaluation of IV Characteristic)

Four radiation detection elements manufactured in Test Example 1 were taken and designated as Examples 1-3 and Comparative Example 1.

Next, each was placed in an annealing furnace and annealed (electrode annealing) under the conditions shown below. The annealing atmosphere was $N_2$ flow gas at a flow rate of 10 L/min.

- Example 1 (150°C, 24 hours), Example 2 (150°C, 30 minutes), Example 3 (150°C, 10 minutes), Comparative Example 1 (300°C, 24 hours)

Next, a voltage was applied to each radiation detection element and the current was measured. The current was also measured for each radiation detection element before annealing.

Here, by gradually applying voltage to the radiation detection element, an IV curve (IV characteristic) was plotted on a graph based on the applied voltage (V) and the resulting current (I). Next, the IV characteristic was analyzed using the thermionic emission model (electron conduction model at the metal (conductor)-semiconductor interface) shown in the following equations (1) and (2).

$$I = I_0 \left[ \exp\left(\frac{qV}{nkT}\right) - 1 \right] \qquad (1)$$

$$I_0 = SAT^2 \exp\left(-\frac{q\varphi_B}{kT}\right) \qquad (2)$$

In equations (1) and (2), q: elementary charge, V: applied voltage, n: ideality factor, k: Boltzmann constant, T: absolute temperature, S: element area, A: Richardson constant, and $\varphi_B$: energy barrier height. The ideality factor n of the IV characteristic is calculated using equations (1) and (2).

The results of the IV characteristic analysis using the thermionic emission model for each radiation detection element before and after annealing are shown in FIGs. 4 (Example 1), 5 (Example 2), 6 (Example 3), and 7 (Comparative Example 1).

For Examples 1 to 3, the ideality factor n of the IV characteristic was 1.4. Therefore, the junction interface state of the radiation detection elements in Examples 1 to 3 is good, and it is expected that the operating current at high voltage application will be reduced and the spectral characteristics will be improved.

On the other hand, in Comparative Example 1, the ideality factor n of the IV characteristic (IV CHARACTERISTIC) could not be measured.

(Test Example 3: Evaluation of Energy Resolution)

A radiation detector, as shown in FIG. 1, was constructed by connecting a charge amplifier (Clear Pulse, Model 581), a waveform shaping amplifier (Clear Pulse, Model 4417), and an MCA (Clear Pulse, Model ADC 1125) to the radiation detection element manufactured in Test Example 1. The spectrum of 122 keV gamma rays emitted from cobalt ($^{57}$Co) was measured when a bias voltage of 500V was applied to the radiation detector using a bias power supply (Clear Pulse, Model 6671PN). The peak half-width ΔE and the radiation energy (peak channel value) E were determined from the radiation spectrum, and the energy resolution (%) was obtained by calculating ΔE/E. Furthermore, the energy resolution (%) of each of the 30 radiation detection elements manufactured in Test Example 1 was evaluated using the above procedure, and their average value and standard deviation were calculated. Note that the values for samples where spectrum measurement was not possible were excluded from the calculation.

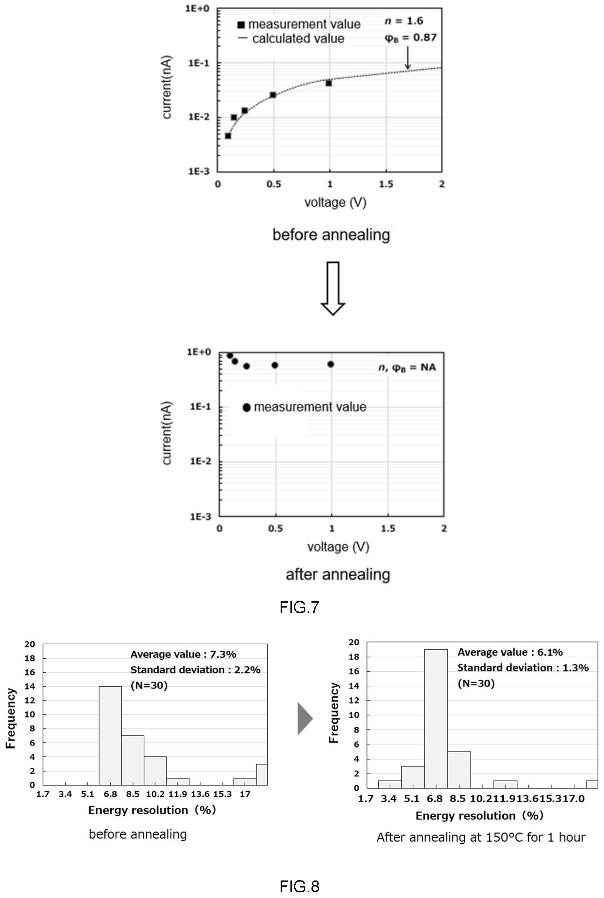

Furthermore, each of these 30 radiation detection elements was placed in an annealing furnace and annealed (electrode annealing) at 150°C for 1 hour. The annealing atmosphere was $N_2$ flow gas at a flow rate of 10 L/min. The energy resolution (%) of the 30 radiation detection elements after annealing was evaluated under the same conditions as above. The average value and standard deviation of the energy resolution (%) of these 30 radiation detection elements were also calculated. Values for samples for which spectral measurement was not possible were excluded from the calculations. The evaluation results are shown in Table 1 and FIG. 8.

As shown in Table 1 and FIG. 8, the average energy resolution for 122 keV gamma rays emitted from $^{57}$Co for the radiation detection elements after electrode annealing at 150°C for 1 hour was 6.1%. The standard deviation of the energy resolution of the 30 radiation detection elements was 1.26%. Therefore, multiple radiation detection elements with well-suppressed variations in energy resolution could be obtained from a single wafer, resulting in improved producing efficiency. For samples No. 20 (before annealing) and No. 26 (before annealing), the poor condition of the interface between the metal electrode and the wafer caused an abnormal increase in operating current, preventing normal spectral measurement. After annealing, the interface condition improved, making spectral measurement possible. For sample No. 30 (before and after annealing), spectral measurement was not possible due to poor crystal properties in the relevant wafer region.

Table 1

| Sample No. | Energy resolution (%) | |
|---|---|---|
| | Before annealing | After annealing |
| 1 | 5.8 | 5.8 |
| 2 | 7.6 | 6.3 |
| 3 | 16.3 | 10.5 |
| 4 | 10.4 | 5.8 |
| 5 | 5.5 | 3.4 |
| 6 | 6.7 | 6.9 |
| 7 | 6.9 | 5.5 |
| 8 | 5.8 | 5.3 |
| 9 | 6.4 | 6.9 |
| 10 | 6.7 | 5.1 |
| 11 | 8.8 | 5.8 |
| 12 | 6 | 5.1 |
| 13 | 5.7 | 5.6 |
| 14 | 6 | 6 |
| 15 | 5.3 | 4.4 |
| 16 | 5.8 | 6.5 |
| 17 | 7.7 | 5.8 |
| 18 | 6.7 | 6 |
| 19 | 6.9 | 6 |
| 20 | Not measurable | 6.1 |
| 21 | 6.3 | 8.2 |
| 22 | 9.1 | 6 |
| 23 | 6 | 5.6 |
| 24 | 7.4 | 6.1 |
| 25 | 7.2 | 5.8 |
| 26 | Not measurable | 5.6 |
| 27 | 7.3 | 5.9 |
| 28 | 8.6 | 7.2 |
| 29 | 9 | 7.9 |
| 30 | Not measurable | Not measurable |

(Test Example 4: Evaluation of the Annealing Temperature Dependence of Resistivity)

Multiple radiation detection elements manufactured in Test Example 1 were taken and placed in an annealing furnace. Annealing (electrode annealing) was performed at 100°C for 24 hours, 150°C for 24 hours, 200°C for 24 hours, 250°C for 24 hours, and 300°C for 24 hours. The annealing atmosphere was $N_2$ flow gas at a flow rate of 10 L/min.

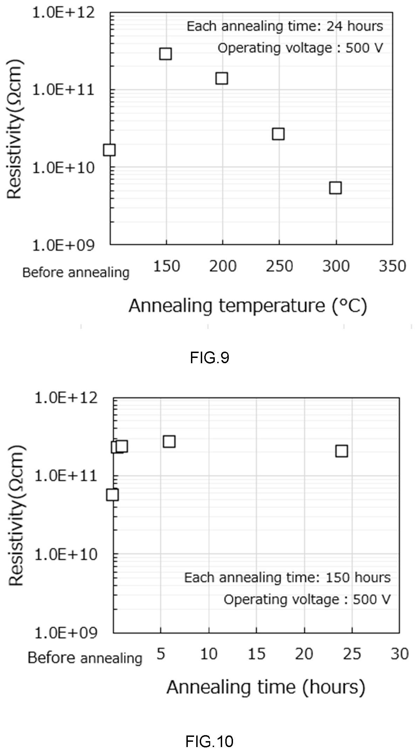

Next, the resistivity ($\rho$) at an operating voltage of 500V was measured for each radiation detection element before annealing and after the aforementioned annealing. Specifically, the current (I) and voltage (V) values were measured when an operating voltage of 500V was applied to the radiation detection element. The resistance (R) was calculated using the formula R = V/I, and the $\rho$ was calculated using the formula $\rho = R \times S/L$, given the element's cross-sectional area (S): 4 mm $\times$ 4 mm and thickness (L): 1.4 mm. The evaluation results are shown in Table 2 and FIG. 9.

According to Table 2 and FIG. 9, samples annealed at 150°C for 24 hours and at 200°C for 24 hours showed a resistivity of $1 \times 10^{11}$ $\Omega$cm or higher at an operating voltage of 500V. Furthermore, it can be seen that low-temperature annealing below 200°C increased the resistivity, while annealing above 250°C resulted in a decrease in resistivity compared to before annealing.

Table 2

| Annealing Temperature (°C) | Resistivity ($\Omega$cm) |
|---|---|
| 100 | 1.6E+10 |
| 150 | 2.8E+11 |
| 200 | 1.4E+11 |
| 250 | 2.6E+10 |
| 300 | 5.3E+09 |

(Test Example 5: Evaluation of the Annealing Time Dependence of Resistivity)

Multiple radiation detection elements manufactured in Test Example 1 were taken and placed in an annealing furnace. Annealing (electrode annealing) was performed at 150°C for 30 minutes, 1 hour, 6 hours, and 24 hours, respectively. The annealing atmosphere was $N_2$ flow gas at a flow rate of 10 L/min.

Next, the resistivity ($\rho$) at an operating voltage of 500V was measured for each radiation detection element before annealing and after the aforementioned annealing. Specifically, the current (I) and voltage (V) values were measured when an operating voltage of 500V was applied to the radiation detection element. The resistance (R) was calculated using the formula R = V/I, and the resistivity ($\rho$) was calculated using the formula $\rho = R \times S/L$, based on the element's cross-sectional area (S): 4 mm $\times$ 4 mm and thickness (L): 1.4 mm. The evaluation results are shown in Table 3 and FIG. 10.

Table 3 and FIG. 10 show that the samples annealed at 150°C for 30 minutes, 1 hour, 6 hours, and 24 hours all exhibited a resistivity of $1 \times 10^{11}$ $\Omega$cm or higher at an operating voltage of 500V. Furthermore, it can be seen that short-duration annealing of 30 minutes increased the resistivity, leading to a tendency towards saturation.

Table 3

| Annealing Time (h) | Resistivity ($\Omega$cm) |
|---|---|
| 0 | 5.6E+10 |
| 0.5 | 2.3E+11 |
| 1 | 2.3E+11 |
| 6 | 2.6E+ 11 |
| 24 | 2.0E+11 |

(Test Example 6: Evaluation of the Annealing Temperature Dependence of $\mu\tau$ Value)

Multiple radiation detection elements manufactured in Test Example 1 were taken and placed in an annealing furnace. Annealing (electrode annealing) was performed at 100°C for 24 hours, 150°C for 24 hours, 200°C for 24 hours, and 250°C for 24 hours, respectively. The annealing atmosphere was $N_2$ flow gas at a flow rate of 10 L/min.

Next, radiation detectors as shown in FIG. 1 were constructed for each radiation detection element before annealing and after the aforementioned annealing. The spectra of 122 keV gamma rays emitted from cobalt ($^{57}$Co) were

measured using these radiation detectors when bias voltages of 250, 500, 700, and 900 V were applied.

Next, the peak channel (peak position) of the spectrum for each bias voltage was determined, the bias voltage dependence of the peak channel was graphed, and the correlation of the peak channel was fitted using the model equation "Hecht's equation" shown in equation (3) below ($\mu\tau$ is the feedback parameter). In equation (3), $CH_{peak}$: peak channel, $V_{out}$: signal voltage, $V_{bias}$: bias voltage, D: element thickness.

$$CH_{peak} \propto V_{out} \propto \frac{\mu\tau V_{bias}}{D^2}\left(1 - \exp\left(-\frac{D^2}{\mu\tau V_{bias}}\right)\right) \qquad (3)$$

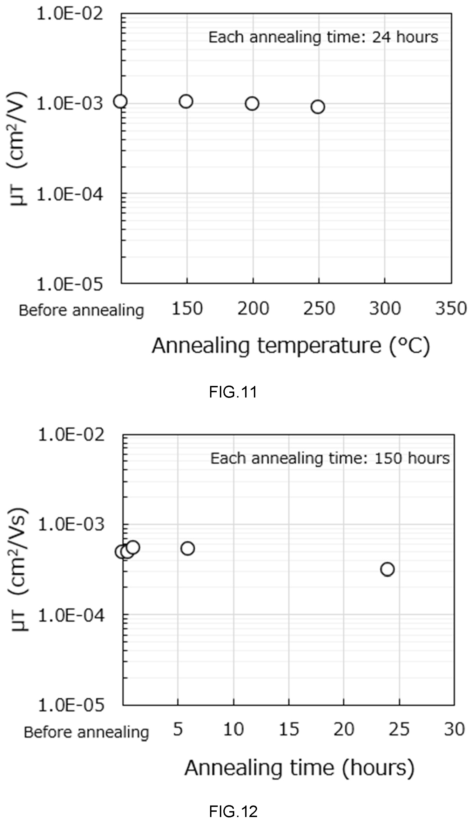

The evaluation results are shown in Table 4 and FIG. 11. According to Table 4 and FIG. 11, the $\mu\tau$ value hardly changes before and after annealing (it does not change up to an annealing temperature of 250°C). Therefore, it is expected that the operating current of the device can be reduced without degrading the $\mu\tau$ value (product of mobility and carrier lifetime), and the operating characteristics against radiation (energy resolution) can be improved.

Table 4

| Annealing Temperature (°C) | $\mu\tau$ (cm$^2$/V) |
|---|---|
| 100 | 1.0E-03 |
| 150 | 1.0E-03 |
| 200 | 9.7E-04 |
| 250 | 9.0E-04 |

(Test Example 7: Evaluation of the Annealing Time Dependence of $\mu\tau$ Value)

Multiple radiation detection elements manufactured in Test Example 1 were taken and placed in an annealing furnace. Annealing (electrode annealing) was performed at 150°C for 30 minutes, 1 hour, 6 hours, and 24 hours, respectively. The annealing atmosphere was $N_2$ flow gas at a flow rate of 10 L/min.

Next, a radiation detector, as shown in FIG. 1, was constructed for each radiation detection element before annealing and after annealing. The spectra of 122 keV gamma rays emitted from cobalt ($^{57}$Co) were measured using these radiation detectors when bias voltages of 250, 500, 700, and 900 V were applied.

Next, the peak channels (peak positions) of the spectra for each bias voltage were determined, the bias voltage dependence of the peak channels was graphed, and the correlation of these peak channels was fitted using the model equation "Hecht's equation" shown in equation (3) above ($\mu\tau$ is the feedback parameter).

The evaluation results are shown in Table 5 and FIG. 12. According to Table 5 and FIG. 12, the $\mu\tau$ value remains almost unchanged until at least 24 hours of annealing. Therefore, it is expected that the operating current of the device can be reduced without degrading the $\mu\tau$ value (product of mobility and carrier lifetime), thereby improving the operating characteristics (energy resolution) against radiation.

Table 5

| Annealing Time (h) | $\mu\tau$ (cm$^2$/V) |
|---|---|
| 0 | 4.8E-04 |
| 0.5 | 4.9E-04 |
| 1 | 5.5E-04 |
| 6 | 5.2E-04 |
| 24 | 3.0E-04 |

Description of Reference Numerals

1. Radiation detector

2. Radiation detection element

3. Capacitor

4. Amplifier (Amplification unit)

5. Multichannel analyzer

6. Compound semiconductor crystal substrate

6a. Main surface (A surface)

6b. Main surface (B surface)

7. Common electrode (metal electrode)

8. Pixel electrode (metal electrode)

61. Bulk crystal

62. Intermediate layer

**Claims**

1. A radiation detection element comprising:

   a compound semiconductor crystal substrate made of zinc cadmium telluride with indium added as an impurity; and
   a metal electrode provided on a surface of the compound semiconductor crystal substrate;
   wherein an energy resolution for 122 keV gamma rays emitted from $^{57}$Co is 7% or less.

2. The radiation detection element according to claim 1,
   wherein the energy resolution for 122 keV gamma rays emitted from $^{57}$Co is 5% or less.

3. The radiation detection element according to claim 1,
   wherein the energy resolution for 122 keV gamma rays emitted from $^{57}$Co is 3.4% or less.

4. The radiation detection element according to claim 1,
   wherein an ideality factor n of an IV characteristic is 1.0 to 1.5.

5. The radiation detection element according to claim 1,
   wherein a resistivity at an operating voltage of 500 V is $1 \times 10^{11}$ $\Omega$cm or more.

6. A radiation detector comprising:

   the radiation detection element according to any one of claims 1 to 5; and
   an amplification unit connected to the radiation detection element and amplifying an electrical signal output from the radiation detection element.

7. A method for producing a radiation detection element, comprising:

   cutting a wafer from an ingot of a compound semiconductor crystal containing zinc cadmium telluride with indium added as an impurity, and polishing the wafer;
   forming a metal electrode on a surface of the wafer;
   cutting a radiation detection element from the wafer on which the metal electrode is formed; and
   placing the radiation detection element in an annealing furnace and performing annealing at 100 to 200°C for 10 minutes to 24 hours.

8. A method for producing a radiation detection element, comprising:

cutting a wafer from an ingot of a compound semiconductor crystal containing zinc cadmium telluride with indium added as an impurity, and polishing the wafer;
forming a metal electrode on a surface of the wafer;
placing the wafer on which the metal electrode is formed in an annealing furnace and annealing at 100 to 200°C for 10 minutes to 24 hours; and
cutting a radiation detection element from the annealed wafer;

9. The method for producing a radiation detection element according to claim 7 or 8,
wherein the radiation detection element has an energy resolution of 7% or less for 122 keV gamma rays emitted from $^{57}$Co.

10. The method for producing a radiation detection element according to claim 7,
wherein, in cutting out a radiation detection element from a wafer, 30 radiation detection elements are cut out from one wafer, and after the annealing, a standard deviation of the energy resolution of the 30 radiation detection elements when the energy resolution for 122 keV gamma rays emitted from $^{57}$Co is measured under the same conditions, is 2% or less.

11. The method for producing a radiation detection element according to claim 8,
wherein, in cutting out a radiation detection element from a wafer, 30 radiation detection elements are cut out from one wafer, and a standard deviation of the energy resolution of the 30 radiation detection elements when the energy resolution for 122 keV gamma rays emitted from $^{57}$Co is measured under the same conditions, is 2% or less.

FIG.1

FIG.2

FIG.3

before annealing

after annealing

FIG.4

before annealing

after annealing

FIG.5

before annealing

after annealing

FIG.6

before annealing

⇩

after annealing

FIG.7

before annealing

After annealing at 150°C for 1 hour

FIG.8

FIG.9

FIG.10

FIG.11

FIG.12

## INTERNATIONAL SEARCH REPORT

| | International application No. |
|---|---|
| | **PCT/JP2024/032428** |

**A. CLASSIFICATION OF SUBJECT MATTER**

*G01T 1/24*(2006.01)i; *H01L 31/08*(2006.01)i
FI:    G01T1/24; H01L31/00 A; H01L31/08 N

According to International Patent Classification (IPC) or to both national classification and IPC

**B. FIELDS SEARCHED**

Minimum documentation searched (classification system followed by classification symbols)

G01T1/24; H01L31/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 5953116 B2 (JX NIPPON MINING & METALS CORP.) 17 June 2016 (2016-06-17) paragraphs [0021]-[0044], fig. 1-8 | 1-6 |
| A | | 7-11 |
| A | WO 2020/235124 A1 (JX NIPPON MINING & METALS CORP.) 26 November 2020 (2020-11-26) fig. 1 | 1-11 |
| A | WO 2019/187217 A1 (JX NIPPON MINING & METALS CORP.) 03 October 2019 (2019-10-03) fig. 2 | 1-11 |
| A | JP 2016-153362 A (JX NIPPON MINING & METALS CORP.) 25 August 2016 (2016-08-25) paragraphs [0030]-[0031], fig. 1 | 1-11 |
| A | JP 2016-029380 A (JX NIPPON MINING & METALS CORP.) 03 March 2016 (2016-03-03) fig. 1 | 1-11 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 776 032 A1**

**INTERNATIONAL SEARCH REPORT**

International application No.

**PCT/JP2024/032428**

### C. DOCUMENTS CONSIDERED TO BE RELEVANT

| Category* | Citation of document, with indication, where appropriate, of the relevant passages | Relevant to claim No. |
|---|---|---|
| A | JP 2016-018972 A (JX NIPPON MINING & METALS CORP.) 01 February 2016 (2016-02-01)<br>    fig. 1 | 1-11 |
| A | JP 2015-137885 A (JX NIPPON MINING & METALS CORP.) 30 July 2015 (2015-07-30)<br>    fig. 1 | 1-11 |
| A | JP 2014-196213 A (JX NIPPON MINING & METALS CORP.) 16 October 2014 (2014-10-16)<br>    fig. 1 | 1-11 |
| A | JP 2013-157494 A (JX NIPPON MINING & METALS CORP.) 15 August 2013 (2013-08-15)<br>    fig. 1 | 1-11 |
| A | JP 03-248578 A (JAPAN ENERGY CORP.) 06 November 1991 (1991-11-06)<br>    claim 1, fig. 1 | 1-11 |

Form PCT/ISA/210 (second sheet) (July 2022)

## INTERNATIONAL SEARCH REPORT
### Information on patent family members

International application No.

**PCT/JP2024/032428**

| Patent document cited in search report | | | Publication date (day/month/year) | Patent family member(s) | | | Publication date (day/month/year) |
|---|---|---|---|---|---|---|---|
| JP | 5953116 | B2 | 17 June 2016 | (Family: none) | | | |
| WO | 2020/235124 | A1 | 26 November 2020 | US | 2022/0158007 | A1 | |
| | | | | fig. 1 | | | |
| | | | | EP | 3923036 | A4 | |
| WO | 2019/187217 | A1 | 03 October 2019 | US | 2021/0011180 | A1 | |
| | | | | fig. 2 | | | |
| | | | | EP | 3758073 | A4 | |
| | | | | KR | 10-2020-0133797 | A | |
| | | | | CN | 111937163 | A | |
| | | | | TW | 201943062 | A | |
| JP | 2016-153362 | A | 25 August 2016 | (Family: none) | | | |
| JP | 2016-029380 | A | 03 March 2016 | (Family: none) | | | |
| JP | 2016-018972 | A | 01 February 2016 | (Family: none) | | | |
| JP | 2015-137885 | A | 30 July 2015 | (Family: none) | | | |
| JP | 2014-196213 | A | 16 October 2014 | (Family: none) | | | |
| JP | 2013-157494 | A | 15 August 2013 | (Family: none) | | | |
| JP | 03-248578 | A | 06 November 1991 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5953116 B